# EUROPEAN PATENT APPLICATION

(11) **EP 2 644 318 A1**
(43) Date of publication of application: **02.10.2013**
(21) Application number: 12425062.2
(22) Date of filing: 26.03.2012
(51) Int. Cl.: B23Q 11/00

(54) **Tool assembly**

(71) Applicant: Renieri, Maria Assunta, 53036 Poggibonsi (SI) (IT)
(72) Inventor: Fantacci, Simone, 53036 Poggibonsi (SI) (IT)
(74) Representative: Leotta, Antonio

(57) **Abstract**

A shaving cutter machining tool assembly of the type including a tool holder chuck (11) trained into rotation around its own axis, a related tool (12), in particular for processing woody material or wood substitutes, and a suction member (13) rotating along with the tool assembly, and designed to remove the shavings and dust generated in the processing area, by a mechanical-pneumatic action. Shaving removal is particularly effective and noiseless and the machining assembly is very versatile due to the particular geometry of the suction member (13) and the coupling mode of the same with the tool holder chuck (11).

## Description

### TECHNICAL FIELD

The present invention relates to a shaving cutter machining tool assembly of the type including a tool holder chuck trained into rotation around its own axis, a related tool, in particular for processing woody material or wood substitutes, and an element integrally rotating with the spindle and the relative tool, and designed to remove the shavings and dust generated in the processing area, by a mechanical-pneumatic action.

### STATE OF THE ART

In the shaving cutter machining tool assemblies with a rotating tool, including a tool holder chuck, and a tool removably associated thereto, the removal of shavings from the processing area is a very real problem.

In the processing of woody materials the use of liquids is not possible, therefore the problem of shaving removal is solved by means of mechanical-pneumatic systems. In this field, the problem is even more significant, in that the processing parameters (high cutting speed) and the tool characteristics lead to the production of very thin shavings and dust, which cause high hazards for the operators' health by easily dispersing in the air.

Solutions are known, in which the machining assemblies are associated with suction systems independent from the chuck and the tool, provided for aspiration of the shavings.

This type of known systems not always prevent accumulation of dust and shavings on the machine given the difficulty of operating in the proximity of the processing area, and cannot therefore avoid processing problems that involve both the production of a large quantity of rejected pieces and high maintenance costs.

It is also known to provide, as an alternative or in combination with the previous solution, tools provided with surface openings communicating with an internal suction duct.

With solutions of this type, many of the shavings just formed are immediately sucked into the tool and then evacuated.

However, the above described solution has limitations due to the fact that, in addition to significantly increase the cost of the tools, suction is effective only in a very limited area around the tool.

Other known solutions are also known which provide an impeller or other similar element with mechanical-pneumatic action, integrated directly into the tool in a position coaxial with the rotation axis of the tool itself.

Said impeller, by exploiting the rotation imparted by the tool, creates a suction flow that surrounds externally the tool itself and causes an suction action in an area close to the cutting edge, thus sucking the shavings along the outer periphery of the tool.

Anyway, also this solution has a very limited efficiency in removing the shavings and greatly increases the production cost of the tools.

### SUMMARY OF THE INVENTION

The object of the present invention is therefore to propose a machining tool assembly, in particular for processing woody materials, which has a high effectiveness in removing processing shavings and dust and which overcomes the above mentioned problems of the prior art.

The above mentioned objects and others are achieved by means of a machining tool assembly as set forth and characterized in the independent claim.

The dependent claims describe other characteristics of the present invention or variants to the main solution idea.

A machining tool assembly, in particular for woody materials, conventionally includes a tool holder chuck trained into rotation around its own axis, and a related tool, in particular suitable for processing woody material or wood substitutes.

Also conventionally, a shaving cutter machining tool assembly for woody materials include a suction member rotating along with the tool and designed to remove the shavings and dust generated in the processing area, by a mechanical-pneumatic action.

According to a characteristic aspect of the present invention, the rotating member is removably coupled externally with said chuck and includes a bell-shaped body designed to form a suction chamber around the tool and featuring a plurality of openings in its side wall, shaped in a way such as to form evacuation ducts having decreasing section, with reference to the evacuation direction.

Thanks to the particular shape of the suction member, evacuation of shavings and dust is very effective in a wide area around the tool. The suction member moves along with the chuck and the related tool but is a removable member physically separate therefrom, therefore, its use is extremely flexible and does not affect the production costs of the tool.

Advantageously, the suction member is made in one piece and the evacuation ducts made by drilling and/or milling, carried out by attacking the body of the suction member at the outer lateral surface.

According to a first embodiment of the present invention, the chuck is a substantially standard type clamp holder chuck and includes a tightening ferrule for a tool locking elastic clamp, which tightening ferrule is externally shaped so as to extend ideally the evacuation ducts within the suction chamber.

According to a specific embodiment variation, the evacuation ducts are angularly evenly distributed in the body of said suction member.

In alternative, the evacuation ducts are angularly unevenly distributed in the body of said suction member.

Advantageously, the position of the suction member relative to the chuck can be adjusted in the direction defined by the rotation axis of the machining tool assembly.

According to an advantageous embodiment, the suction member is made of metallic material and is provided with a coating of sound-absorbing material.

A paint coating with a sound-absorbing material is relatively inexpensive and reduces drastically the noise generated by rotation of the suction member.

**In** alternative, still in order to reduce the noise produced by high speed rotation of the suction member, the suction member body is made of a polymer and is possibly provided with one or more circumferential reinforcement rings of metallic material.

### BRIEF DESCRIPTION OF THE DRAWINGS

These and other features of the invention will be more easily understood from the following description of preferred embodiments thereof, provided as non-limitative examples, with reference to the attached figures, in which:
- Figure 1 shows a partially sectional view of a first embodiment of a machining tool assembly according to the present invention;
- Figure 2 shows a partial side view, in partial section, of a second embodiment of a machining tool assembly according to the present invention;
- Figure 3 shows a side sectional view of an embodiment variation of a suction member of a machining tool assembly according to the present invention;
- Figure 4 shows a sectional view taken along the line A-A of a further embodiment variation of a suction member of a machining tool assembly according to the present invention.

To facilitate understanding, like reference numerals have been used, where possible, to identify substantially like common elements in the figures. It should be understood that elements and features of one embodiment may be conveniently incorporated in the other embodiment.

### DESCRIPTION OF THE PREFERRED EMBODIMENTS

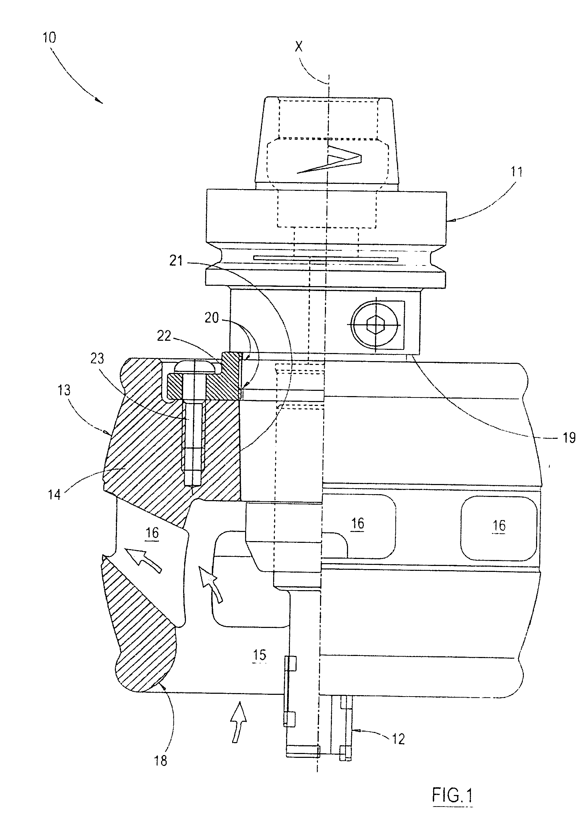

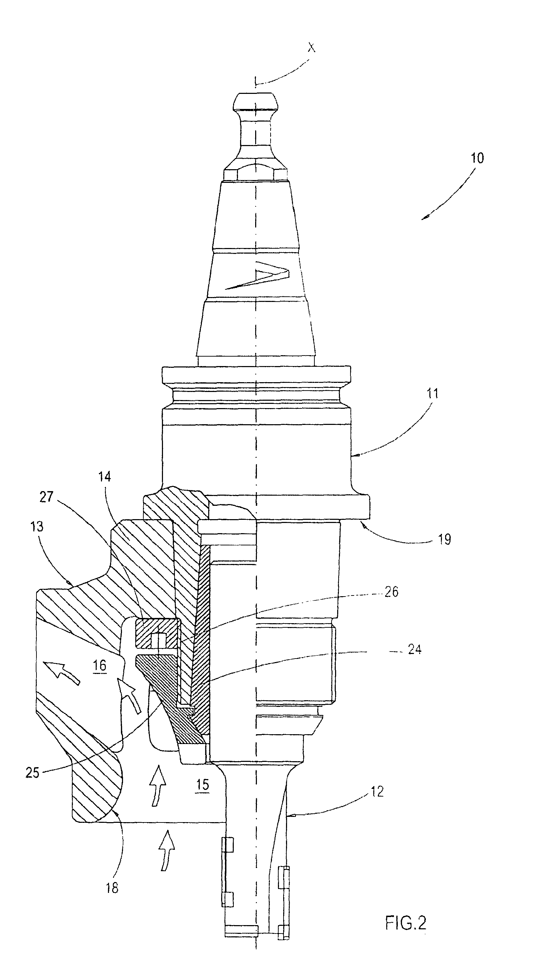

With reference to Figures 1 and 2, numeral 10 generally indicates a machining tool assembly designed to perform milling machining on woody material raw or semi-finished parts.

The machining tool assembly 10 substantially includes a tool holder chuck, 11, a related tool, 12, mounted thereto axially with respect to a common rotation axis, X, and a suction member, 13, removably constrained to the chuck 12 and coaxial therewith and with the tool 12 along the rotation axis X.

The tool 12 typically comprises a series of cutting bits suitably arranged at its free end, designed to perform the cutting and/or etching action and then to produce shavings.

The suction member 13, constrained to the outer lateral surface of the chuck 12, includes a body, 14, shaped as a bell and designed to form a suction chamber, 15, around the tool 11 and features a plurality of openings in its side wall, which are shaped in a way such as to form evacuation ducts, 16, having decreasing section, with reference to the shaving evacuation direction.

The suction member rotates integrally with the spindle, and therefore also with the tool, and the rotation of the evacuation ducts 16 provokes a vacuum in the suction chamber 15, which causes the suction of the shavings and dust present around the tool 11 in the same suction chamber, and then in the evacuation ducts 16 from which they are ejected.

With reference to the shaving evacuation direction, the evacuation ducts 16 have a decreasing cross-section and are inclined upwards, in order to maximize the suction efficiency and the ease of channeling the shavings in the ducts. Also in order to optimize the suction efficiency, the body of the suction member 13 has a large connection curvature radius, 18, in the region of the entrance of the suction chamber 15. The connection curvature radius 18 generates a diffusion effect that increases the vacuum in the suction chamber 15. In addition, the evacuation ducts 16 have flat walls perpendicular and connected to each other. The above mentioned shape of the ducts is such that they can be made by drilling and/or milling, by attacking the suction member at the outer lateral surface. In this way, the suction member 13 can be made in one piece.

In the exemplary embodiment of fig. 1 the chuck 11 is a hydraulic chuck of a conventional type in which the tool 12 is firmly bound due to the presence of a hydraulic system that determines a variation of the chuck internal geometry, such as to cause the clamping and simultaneous centering of the tool 12. In order to allow coupling to the suction member 13, the chuck 11 features, in the region of its outer lateral surface, a stop surface, 19, one or more threaded surfaces, 20, situated thereunder, and a conical portion, 21. An annular element, 22, internally threaded, is screwed on the threaded portions 20 up to abut against the stop surface 19. A conical inner portion of the suction element 13 mates with the conical portion 21 and is fixed to the annular element 22 by screw means, 23. As it can be easily understood, the way of connecting the suction element 13 to the chuck 11 is extremely simple and allows the use of chucks 11 and tools 12 of substantially conventional type.

In the exemplary embodiment of fig. 2 the chuck 11 is a clamp holder chuck of a conventional type, in which the tool 12 is firmly bound due to the presence of an elastic clamp, 24, of a conventional type, which mates with the chuck 11 and is anchored thereto, also in a conventional manner, by means of a tightening ferrule, 25. In this specific exemplary embodiment, the tightening ferrule 25 is externally shaped so as to extend ideally the evacuation ducts 16 within the suction chamber 15. In order to allow coupling to the suction member 13, the chuck 11 features, in the region of its outer lateral surface, a stop surface, 19, a conical portion, 21 and the threaded outer surface, 26, to which the tightening ferrule 25 is conventionally coupled. The suction element 13 mates with the conical portion 21 with a relative conical inner portion and goes in abutment with its upper surface against the stop surface 19. A further tightening ferrule, 27, is screwed to the threaded surface 26 of the chuck up to tighten the suction member 13 while keeping it firmly in abutment against the stop surface 19. Also in this exemplary embodiment, the way of connecting the suction element 13 to the chuck 11 is extremely simple and allows the use of chucks 11 and tools 12 of substantially conventional type.

The suction member 13 is advantageously made of metallic material such as steel or high strength aluminum.

It is clear that, however, the machining tool assembly described above can be subject to modifications and further embodiments can be envisaged, without departing from the scope of the present invention.

For example, embodiment variations of the suction element 13 may be provided to solve problems of noise that may occur in some cases. In particular, with very high rotation speed, the air and shavings moved by the suction element 13 may in some cases generate sound vibrations is very high both in frequency and intensity. To significantly reduce the noise problem, the suction member 13, preferably made of metallic material such as steel or high strength aluminum, can be surface coated with a sound-absorbing material. This can be done in a very simple and inexpensive way, for example by a dip coating with Teflon or other similar material.

In accordance with another embodiment variation, the suction member 13 is completely made of a plastic material having the necessary mechanical characteristics. Polymers having these characteristics are, for example, polyamide resins and polyacetal resins. **In** any case, plastic materials or even composite products having yield stress of not less than 70 N/mm² can be used. A suction member 13 made of one of the above mentioned materials has the required mechanical characteristics and, when made to rotate at high speed, allows a considerable reduction of the noise produced, compared to suction members of similar shape but made of metallic material.

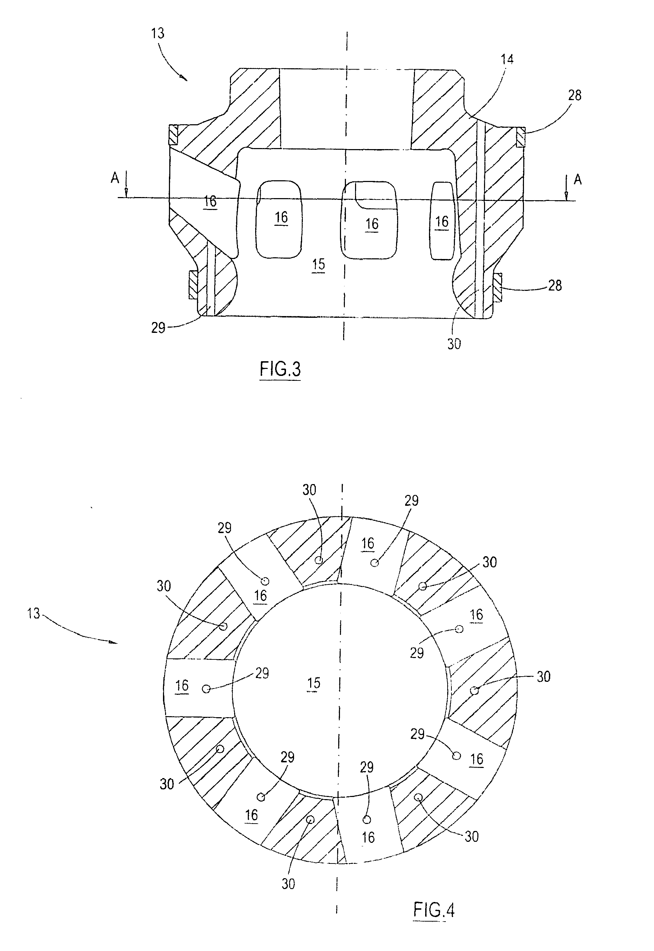

Another embodiment of a suction member 13 according to the present invention is as shown in fig. 3. The body 14 of the suction member 13 is made of a very inexpensive type plastic material and with very limited mechanical strength characteristics. To ensure the necessary mechanical strength the suction member is in this case provided with circumferential reinforcement rings, 28, of metallic material, such as high strength aluminum.

Other embodiments may relate to the shape and distribution of the evacuation ducts 16. As far as the shape is concerned, it is studied to maximize the suction effect. In this view, in all the exemplary embodiments shown, the walls of the suction member 13 have greater thickness in areas axially intermediate, in which the ducts are present, with respect to end regions, so as to form evacuation ducts 16 of adequate length. As regards the distribution of the ducts, they may be distributed so as to be angularly equispaced or, as shown in Figure 4, in order to reduce the noise, the evacuation ducts 16 may be conveniently angularly spaced in unevenly way.

Another embodiment variation, also shown again in figures 3 and 4, has axial holes, 29, 30, formed in the body 14 of the suction member 13. First axial holes, 29, set the bottom surface of the suction member 13 in communication with the evacuation ducts 16, while second axial holes 30 depart again from the bottom surface of the body 14 of the suction member 13 and extend through it, to open in the region of an upper surface, without crossing the evacuation ducts 16. By virtue of the rotation of the suction member 13, an air flow is generated in the first axial holes 29, which is directed by the evacuation ducts 16 toward the bottom surface, which allows an increase of the air flow towards the suction chamber 15. The dimensions and arrangement of the first axial holes 29 are such that an air flow only is generated therein, while, due to their momentum, shavings and other particles in general pass through the evacuation ducts 16 without entering in the first axial holes 29. In the second axial holes 30, however, an air flow directed from the upper surface to the lower surface of the body 14 can be created by means of external ventilation means capable of blowing air into the openings of the second axial holes 30 present in the region of the upper surface. In this way, the air flow which flows into the suction chamber 15 is increased.

According to an embodiment of the present invention, the suction member 13 is constrained to the spindle 11 in such a way that its position can be adjusted in the direction defined by the rotation axis of the machining tool assembly. Thanks to this arrangement, following changes in the machining depth or replacement of the tool 12 with a tool of a different length, the configuration of the machining assembly can be simply modified to match with the new working parameters. The position adjustability of the suction member 13 may be obtained, for example, by making the suction member 13 in two portions slidably coupled to each other and provided with means for mutual locking. For example, a first portion may be integral with the chuck, and a second portion, in which the ducts 16 are formed, could be slidably coupled to the first one.

These and other variations or modifications could be made to the machining tool assembly of the present invention, while still remaining within the protection scope defined by the following claims.

## Claims

1. A shaving cutter machining tool assembly of the type including a tool holder chuck trained into rotation around its own axis, a related tool, in particular for processing woody material or wood substitutes, and a suction member rotating along with the tool, and designed to remove the shavings and dust generated in the processing area, by a mechanical-pneumatic action, **characterized in that** said suction member is removably coupled externally with said chuck and includes a bell-shaped body designed to form a suction chamber around said tool and featuring a plurality of openings in its side wall, which are shaped in a way such as to form evacuation ducts.

2. A machining tool assembly according to claim 1, **characterized in that** said evacuation ducts have decreasing cross-section, with reference to the evacuation direction.

3. A machining tool assembly according to claim 1 or 2, **characterized in that** said suction member has a connection curvature radius in the region of the entrance of said suction chamber.

4. A machining tool assembly according to any one of the previous claims, **characterized in that** said suction member body in which said ducts are made, is produced in one piece.

5. A machining tool assembly according to the previous claim, **characterized in that** said evacuation ducts are made by drilling and/or milling, carried out by attacking the body of said suction member in the region of the outer lateral surface.

6. A machining tool assembly according to any one of the previous claims, **characterized in that** said evacuation ducts are inclined upwards with reference to the evacuation direction.

7. A machining tool assembly according to any one of the previous claims, **characterized in that** said chuck is a clamp holder chuck, a tightening ferrule of an elastic clamp housed within said clamp holder chuck being shaped externally so as to extend ideally said evacuation ducts within the suction chamber.

8. A machining tool assembly according to the previous claim, **characterized in that** said suction member is constrained to said chuck by means of a further ferrule that can be screwed onto a threaded portion of the outer surface of said chuck to which said tightening ferrule can be associated.

9. A machining tool assembly according to any one of the previous claims, **characterized in that** said evacuation ducts are angularly evenly distributed in the body of said suction member.

10. A machining tool assembly according to any one of claims 1 to 5 **characterized in that** said evacuation ducts are angularly unevenly distributed in the body of said suction member.

11. A machining tool assembly according to any one of the previous claims, **characterized in that** the position of said suction member with respect to said chuck can be adjusted in the direction defined by the rotation axis of said machining tool assembly.

12. A machining tool assembly according to any one of the previous claims, **characterized in that** said suction member is made of metallic material and is provided with a coating of sound-absorbing material.

13. A machining tool assembly according to any one of claims 1 to 10 **characterized in that** the body of said suction member is made of a polymer.

14. A machining tool assembly according to the previous claim, **characterized in that** the body of said suction member is provided with one or more circumferential reinforcement rings of metallic material.
